## Europäisches Patentamt
## European Patent Office
## Office européen des brevets

(11) Numéro de publication: **0 330 250**
**A2**

# (12) DEMANDE DE BREVET EUROPEEN

(21) Numéro de dépôt: **89200260.1**

(51) Int. Cl.⁴: **G06F 3/06**

(22) Date de dépôt: **06.02.89**

(30) Priorité: **23.02.88 BE 8800210**

(43) Date de publication de la demande:
**30.08.89 Bulletin 89/35**

(84) Etats contractants désignés:
**CH DE ES FR GB IT LI LU NL**

(71) Demandeur: **Lizin, Michel**
**Avenue de l'Aquilon, 1**
**B-1200 Bruxelles(BE)**

Demandeur: **Van der Meersch, Francis**
**Chemin de Strins, 25**
**B-1325 Ohain(BE)**

(72) Inventeur: **Lizin, Michel**
**Avenue de l'Aquilon, 1**
**B-1200 Bruxelles(BE)**
Inventeur: **Van der Meersch, Francis**
**Chemin de Strins, 25**
**B-1325 Ohain(BE)**

(74) Mandataire: **Callewaert, Jean et al**
**Bureau Gevers S.A. rue de Livourne 7 bte 1**
**B-1050 Bruxelles(BE)**

(54) **Système de traitement de données comportant un disque dur incorporé dans une unité indépendante.**

(57) Système de traitement de données comportant une première unité (1), par exemple un micro-ordinateur, à laquelle peut se brancher une seconde unité portative (11), qui comporte un disque dur et des moyens de transfert pour transférer vers et à partir du disque dur des données.

## Système de traitement de données comportant un disque dur incorporé dans une unité indépendante

L'invention concerne un système de traitement de données comportant une première unité indépendante dans laquelle est incorporé un processeur, une seconde unité indépendante dans lequel sont logés un disque dur et des moyens de transfert pour réaliser un transfert de données vers et à partir du disque dur, cette première unité comportant également un contrôleur pour gérer l'échange des données entre la première et la seconde unité, lequel système comprenant des moyens de liaison pour raccorder la première et la seconde unité entre elles.

Dans les systèmes connus la première unité est généralement formée par un micro-ordinateur. La seconde unité comprend une enveloppe ou un châssis dans lequel l'on introduit un boîtier qui contient le disque dur. Cette enveloppe est reliée au micro-ordinateur par l'intermédiaire d'un câble pourvu d'une broche de connexion. Cette enveloppe comporte des moyens de transfert pour réaliser soit une lecture de données stockées sur le disque dur, soit une écriture de données dans les pistes du disque. L'échange de données entre la première et la seconde unité est gérée par un controleur qui peut être repris soit dans l'enveloppe, soit dans la première unité. Par le fait que le disque dur s'incorpore dans cette unité indépendante et qui ne fait donc plus partie intégrante du micro-ordinateur, un tel système offre la possibilité de transporter le disque dur et donc les données qu'il contient, indépendamment d'un ordinateur, et de le brancher sur n'importe quel micro-ordinateur compatible.

Un inconvénient de ces systèmes connus est qu'ils nécessitent une enveloppe dans laquelle on doit glisser le disque dur.

La nécessité de cette enveloppe restreint considérablement les possibilités du disque dur.

En effet, il faut qu'aux divers endroits où l'utilisateur veut brancher son disque dur, une telle enveloppe soit présente pour pouvoir accéder aux données stockées sur le disque ou pour y inscrire des données .

L'invention a essentiellement pour but de remédier à cet inconvénient.

Le système selon l'invention est caractérisé en ce que la seconde unité est une unité portative dans laquelle le disque dur et les moyens de transfert forment un ensemble agencé dans cette seconde unité.

Par le fait que le disque dur et les moyens de transfert sont incorporés dans la seconde unité, qui à son tour est portative, le disque dur et les moyens de transfert forment un ensemble qui peut être transporté tel quel. Cet ensemble peut ainsi être branché sur n'importe quel micro-ordinateur et n'exige pas la présence d'une enveloppe ou d'un châssis particulier.

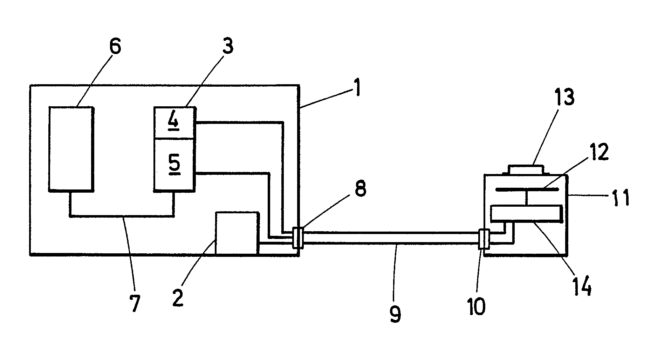

Une forme préférentielle de l'invention sera maintenant décrite, à titre d'exemple non limitatif, à l'aide du dessin unique.

Ce dessin montre une première unité 1, formée par un micro-ordinateur, et une seconde unité 11, qui peut être reliée à la première par l'intermédiaire d'un câble 9.

A cette fin, la première et la seconde unité sont chacune pourvues d'une broche de connexion (8, 10).

Il va bien entendu de soi qu'il s'agit là d'une forme préférentielle et que, par exemple, le câble 9 pourrait être relié de façon permanente soit à la seconde, soit à la première unité.

La première unité comporte, en outre, un micro-processeur 6 relie à un organe de communication 7, auquel est aussi connecté un contrôleur 3. Le contrôleur et le micro-processeur 6 peuvent évidemment être repris dans une même puce. Le contrôleur, qui gère l'échange de données entre le micro-ordinateur et la seconde unité, comporte une interface d'échange de données 4 et un organe de contrôle 5, qui sont chacun reliés à la broche 8. Le micro-ordinateur 1 comporte également une unité d'alimentation 2, permettant de transformer par exemple la tension en provenance du réseau en une tension d'alimentation pour le micro-processeur et le contrôleur. Cette unité d'alimentation est également reliée à la broche 8 pour fournir une tension d'alimentation à la seconde unité.

La seconde unité comporte un disque dur 12, des moyens de transfert 14, et est de préférence pourvue d'une poignée 13.

Les moyens de transfert comportent par exemple un organe de lecture-écriture, un moteur d'entraînement pour faire tourner le disque, et un organe d'adressage permettant de convertir une adresse binaire en provenance du contrôleur en un numero de piste et de secteur et de guider l'organe de lecture-écriture vers une position requise sur le disque.

Dans le système selon l'invention le micro-ordinateur 1 et la seconde unité 1 forment donc chacune une unité indépendante. Les deux unités peuvent être connectées l'une à l'autre par l'intermédiaire du câble 9 et des broches 8 et 10.

L'alimentation de la seconde unité, lorsqu'elle est connectée, se fait à partir de l'unité d'alimentation 2.

L'avantage d'un tel système réside dans le fait que la seconde unité est portative. L'utilisateur peut ainsi emporter son disque dur comprenant toutes les données nécessaires. Il pourra connecter son disque dur partout où il ira pour des raisons professionnelles ou personnelles et où il trouvera un micro-ordinateur compatible. Il lui suffira de relier sa seconde unité personnelle, dans laquelle sont incorporés son disque dur et les moyens de transfert, bar l'intermédiaire du câble 9, au micro-ordinateur présent à l'endroit où il se rendra. Par le fait que le disque dur et les moyens de transfert forment un ensemble incorporé dans la seconde unité, l'utilisateur ne devra pas se soucier de trouver, à l'endroit où il ira, des moyens pour pouvoir accéder aux données stockées sur son disque dur ou pour y écrire des données.

Le fait qu'il peut utiliser son disque dur au lieu d'une diskette lui offre à côté d'une capacité de mémoire accrue un accès bien plus rapide aux données.

Lorsque l'utilisateur aura connecté sa seconde unité au micro-ordinateur, le contrôleur 3 du micro-ordinateur va gérer l'échange des données entre le micro-ordinateur et le disque dur.

Le système selon l'invention permet également de fabriquer des micro-ordinateurs qui ne sont pas pourvus d'un disque dur, puisque celui-ci peut se brancher, comme unité indépendante , au micro-ordinateur.

## Revendications

1. Système de traitement de données comportant une première unité indépendante (1) dans laquelle est incorporé un processeur (6), une seconde unité indépendante (11) dans laquelle sont logés un disque dur et des moyens de transfert pour réaliser un transfert de données vers et à partir du disque dur, cette première unité (1) comportant également un contrôleur (3) pour gérer l'échange des données entre la première et la seconde unité, lequel système comprenant des moyens de liaison (9) pour raccorder la première et la seconde unité entre elles, caractérisé en ce que la seconde unité (11) est une unité portative dans laquelle le disque dur et les moyens de transfert forment un ensemble agencé dans cette seconde unité (11).

2. Seconde unité à utiliser dans un système de traitement de données selon la première revendication, caractérisé en ce que cette seconde unité est encastrée dans un boîtier portatif pourvu d'un organe de connexion (8, 10).

EP 0 330 250 A2